# EUROPEAN PATENT APPLICATION

(11) **EP 4 261 923 A1**
(43) Date of publication of application: **18.10.2023**
(21) Application number: 21906113.2
(22) Date of filing: 08.10.2021
(51) Int. Cl.: H01M 4/13, H01M 4/62

(54) **METHOD FOR PRODUCING POSITIVE ELECTRODE SLURRY AND METHOD FOR PRODUCING POSITIVE ELECTRODE**

(30) Priority: 14.12.2020 JP 2020206997
(71) Applicant: Panasonic Intellectual Property Management Co., Ltd., Osaka-shi, Osaka 540-6207 (JP)
(72) Inventor: MINO, Shinji, Kadoma-shi, Osaka 571-0057 (JP); TOKIEDA, Daisuke, Kadoma-shi, Osaka 571-0057 (JP)
(74) Representative: Novagraaf International SA
(86) International application number: PCT/JP2021/037375
(87) International publication number: WO 2022/130749

(57) **Abstract**

This method for producing a positive electrode slurry comprises: a step wherein an aqueous solution, in which a smectite is dissolved, is mixed with a solvent containing N-methyl-2-pyrrolidone (NMP), thereby preparing an aqueous smectite-NMP solution; a step wherein the aqueous smectite-NMP solution is subjected to thermal dehydration, thereby obtaining a smectite-containing solid content lump; and a step wherein the smectite-containing solid content lump, a positive electrode active material and the solvent containing N-methyl-2-pyrrolidone (NMP) are mixed with each other, thereby preparing a slurry.

## Description

### TECHNICAL FIELD

The present disclosure relates to a method for producing a positive electrode slurry, and a method for producing a positive electrode.

### BACKGROUND

An electrode used in lithium ion secondary batteries includes a current collector, and an active material layer formed on the current collector. The electrode is produced by applying a slurry containing an active material onto a current collector.

For example, Patent Literatures 1 to 5 discloses a technique of applying a positive electrode slurry containing a positive electrode active material and smectite to a positive electrode current collector.

### CITATION LIST

### PATENT LITERATURE

Patent Literature 1: JP 2017-27768 A
Patent Literature 2: JP 2016-170881 A
Patent Literature 3: JP 2014-32776 A
Patent Literature 4: JP 2008-71757 A
Patent Literature 5: JP 2001-266855 A

### SUMMARY

When the supply of the positive electrode slurry to the positive electrode current collector is stopped after the positive electrode slurry is supplied to the positive electrode current collector and applied with a desired length, a trace of stringing (hereinafter, string trace) of the slurry is formed at the coating end of the coated part. The string trace causes deviation from the designed thickness of the positive electrode, leading to decrease in the battery capacity in some cases. A positive electrode lead is welded to a non-coated part of the positive electrode current collector on which the positive electrode slurry is not applied. When the string trace at the end of the coated part is long, it may be difficult to weld the positive electrode lead to the non-coated part.

A method for producing a positive electrode slurry according to one aspect of the present disclosure includes: mixing an aqueous solution in which smectite is dissolved, and an N-methyl-2-pyrrolidone (NMP)-containing solvent, to prepare a smectite-NMP aqueous solution; subjecting the smectite-NMP aqueous solution to thermal dehydration, to obtain a smectite-containing solid mass; and mixing the smectite-containing solid mass, a positive electrode active material, and the N-methyl-2-pyrrolidone (NMP)-containing solvent, to prepare a slurry.

A method for producing a positive electrode according to one aspect of the present disclosure includes applying a positive electrode slurry obtained by the production method to a positive electrode current collector.

According to the method for producing a positive electrode slurry according to one aspect of the present disclosure, it is possible to suppress stringing at the coating end.

### BRIEF DESCRIPTION OF DRAWINGS

FIG. 1 is a schematic view illustrating an example of a configuration of a coating apparatus according to the present embodiment.
FIG. 2 is a schematic view illustrating a state in which a coating slurry is applied on a current collector.

### DESCRIPTION OF EMBODIMENTS

Hereinafter, embodiments of the present disclosure will be described with reference to the drawings.

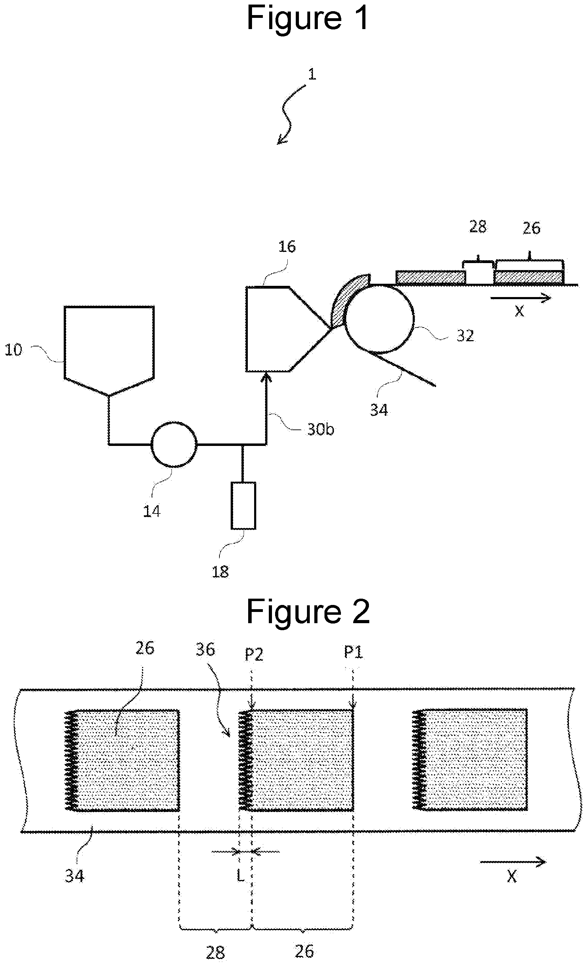

FIG. 1 is a schematic view illustrating an example of a configuration of a coating apparatus according to the present embodiment. A coating apparatus 1 illustrated in FIG. 1 includes a stirrer 10 as a stirring unit, a liquid feeder 14, a coating head 16 as a coating unit, and an intermittent mechanism 18. Although the specific operation of the coating apparatus 1 will be described later, for example, a positive electrode in which a coated part 26 coated with a positive electrode slurry and a non-coated part 28 not coated with a positive electrode slurry are formed on a positive electrode current collector 34 can be obtained by the coating apparatus 1.

The stirrer 10 stirs a positive electrode slurry described later. As the stirrer 10, a known stirrer can be employed, and a magnetic stirrer, a three-one motor, a homogenizer, a media mill, a colloid mill, a homomixer, a homodisper, a planetary mixer, an in-line mixer, or a pipeline mixer can be used, for example.

The liquid feeder 14 feeds the positive electrode slurry to the coating head 16, and is, for example, a pump.

A so-called slot die is generally used as the coating head 16, and the positive electrode slurry is discharged from a slit having a predetermined width. As the slit, a slit formed by a method of sandwiching a plate called a shim having a necessary thickness between an upstream head and a downstream head is common. In addition, a liquid reservoir called a manifold is provided on the side of the upstream head, and coating is generally performed by discharging the coating slurry through the liquid reservoir.

The intermittent mechanism 18 is described as an example of a coating liquid suction method, for example, but is not limited to this method. For example, the intermittent mechanism 18 intermittently sucks the positive electrode slurry to be supplied to the coating head 16 to instantaneously bring the pressure in the coating head 16 into a negative pressure state. As a result, the positive electrode slurry is intermittently discharged from the coating head 16, and the coated part 26 and the non-coated part 28 are formed on the positive electrode current collector 34. For example, foil of a metal such as aluminum which is stable within the potential range of the positive electrode, a film in which the metal is disposed on a surface layer thereof, or the like is used for the positive electrode current collector 34.

An example of the operation of the coating apparatus 1 according to the present embodiment will be described.

The positive electrode slurry is charged into the stirrer 10, and the positive electrode slurry is stirred by the stirrer 10. The positive electrode slurry in the stirrer 10 is supplied to the coating head 16 via a flow path 30b by the liquid feeder 14. Then, the roll 32 rotates at a set rotational speed, and the positive electrode slurry is discharged from the coating head 16 to the positive electrode current collector 34 at a set discharge amount while the band-shaped positive electrode current collector 34 is conveyed in the X direction. In addition, the intermittent mechanism 18 operates periodically, and the discharge of the positive electrode slurry from the coating head 16 is stopped. In this manner, the positive electrode slurry is intermittently applied to the positive electrode current collector 34, and the coated part 26 and the non-coated part 28 are formed.

The positive electrode, in which the coated part 26 and the non-coated part 28 are formed on the positive electrode current collector 34, is dried and rolled as necessary.

FIG. 2 is a schematic view illustrating a state in which the positive electrode slurry is applied onto the positive electrode current collector. As illustrated in FIG. 2, by intermittently applying the positive electrode slurry onto the positive electrode current collector 34, a plurality of coated parts 26 and non-coated parts 28 are alternately formed on the positive electrode current collector 34. The coated part 26 refers to a region from a coating start end P1 to a coating end P2. In addition, the non-coated part 28 is later used for welding of the lead, cutting for each electrode of one battery, and the like.

Normally, even if the discharge of the positive electrode slurry from the coating head 16 is stopped, the coating slurry is elongated from the coating head 16 due to the surface tension of the positive electrode slurry. As a result, the coating slurry is elongated from the coating end P2 toward the non-coated part 28 along the conveying direction X, and a string trace 36 is likely to be formed. If the length L of the string trace 36 is large, lead welding failure may occur in the non-coated part 28, or a decrease in the capacity of the battery may be caused.

However, by using a positive electrode slurry obtained by a method for producing a positive electrode slurry of the present embodiment to be described later, stringing at the coating end P2 is suppressed, and the length L of the string trace 36 is shortened.

Hereinafter, a method for producing a positive electrode slurry of the present embodiment will be described.

The method for producing a positive electrode slurry of the present embodiment includes: a step (aqueous solution adjusting step) of mixing an aqueous solution in which smectite is dissolved, and an N-methyl-2-pyrrolidone (NMP)-containing solvent, to prepare a smectite-NMP aqueous solution; a step (solid mass generation step) of subjecting the smectite-NMP aqueous solution to thermal dehydration, to obtain a smectite-containing solid mass; and a step (slurry preparation step) of mixing the smectite-containing solid mass, a positive electrode active material, and the N-methyl-2-pyrrolidone (NMP)-containing solvent, to prepare a slurry.

### (Aqueous solution adjusting step)

The smectite used in the aqueous solution adjusting step is a swellable clay mineral, and examples thereof include montmorillonite, beidellite, saponite, nontronite, and hectorite. Among them, hectorite is preferable. The concentration of smectite in the aqueous solution in which smectite is dissolved is not particularly limited, but for example, preferably greater than or equal to 5 mass% and less than or equal to 20 mass%. The medium for dissolving smectite is mainly water, but may contain a water-soluble organic medium such as methanol, ethanol, isopropanol, butanol, acetone, methyl ethyl ketone, or tetrahydrofuran.

The N-methyl-2-pyrrolidone (NMP)-containing solvent may be a single solvent of N-methyl-2-pyrrolidone (NMP), or a mixed solvent of N-methyl-2-pyrrolidone (NMP) with another solvent. As the mixed solvent, for example, a mixed solution of NMP and an ester solvent, a mixed solution of NMP and a glyme solvent, or the like is used. Examples of the ester solvent include ethyl acetate, n-butyl acetate, butyl cellosolve acetate, and butyl carbitol acetate. Examples of the glyme solvent include diglyme, triglyme, and tetraglyme.

The aqueous solution in which smectite is dissolved and the N-methyl-2-pyrrolidone-containing solvent are preferably mixed at a volume ratio of, for example, 1 : 0.5 to 1 : 1.5.

### (Solid mass generation step)

The temperature at the time of thermal dehydration of the smectite-NMP aqueous solution may be a temperature at which water evaporates from the smectite-NMP aqueous solution but NMP does not evaporate from the smectite-NMP aqueous solution. The temperature is, for example, preferably higher than or equal to 80°C, more preferably higher than or equal to 100°C, and preferably lower than or equal to 130°C, and lower than 150°C.

The thermal dehydration is desirably performed, for example, until the moisture content in the smectite-containing solid mass to be obtained reaches 0%. However, the thermal dehydration may be stopped in a state in which the moisture content is high (for example, greater than or equal to 5% and less than or equal to 10%). The thermal dehydration of the smectite-NMP aqueous solution may be performed under a reduced pressure environment in a pressure-resistant container.

The smectite solid mass after thermal dehydration changes from a gel state or a jelly state to a mass state having a dried surface depending on the heating time. In order to completely remove moisture contained in the smectite solid mass, the smectite solid mass is preferably dried in a dry atmosphere for 12 hours or longer in a sealed container such as a desiccator. In particular, when the thermal dehydration is stopped with the moisture remaining in the smectite solid mass, the smectite solid mass is preferably dried for 24 hours or longer in a dew point atmosphere at -20°C.

### (Slurry preparation step)

In the slurry preparation step, the smectite-containing solid mass is dissolved in the N-methyl-2-pyrrolidone-containing solvent. This is considered to be because moisture in the smectite is replaced with NMP by thermal dehydration. Since smectite has excellent thixotropy, thixotropy is imparted to the positive electrode slurry in which the smectite-containing solid mass is dissolved in the NMP solvent. Then, by applying the positive electrode slurry having thixotropy to the positive electrode current collector 34, stringing at the coating end P2 is suppressed, and the length L of the string trace 36 is shortened. In the conventional positive electrode slurry to which smectite is added, smectite is not dissolved in the NMP solvent, and therefore thixotropy is not imparted to the positive electrode slurry.

The concentration of the smectite-containing solid mass in the N-methyl-2-pyrrolidone-containing solvent is preferably, for example, greater than or equal to 10 mass%.

In the slurry preparation step, the N-methyl-2-pyrrolidone-containing solvent, the smectite-containing solid mass, and the positive electrode active material are mixed, but a binder, a conductive agent, or the like may be added thereto as necessary. As described above, the N-methyl-2-pyrrolidone-containing solvent may be a single solvent of NMP or a mixed solvent of NMP and another solvent.

Examples of the positive electrode active material include lithium-transition metal composite oxides. Specific examples thereof include lithium cobalt oxide, lithium manganese oxide, lithium nickel oxide, lithium nickel manganese composite oxide, and lithium nickel cobalt composite oxide. In addition, Al, Ti, Zr, Nb, B, W, Mg, Mo, or the like may be added to these lithium-transition metal composite oxides.

Examples of the binder include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), nitrile-butadiene rubber (NBR), carboxymethyl cellulose (CMC) or salts thereof, polyacrylic acid (PAA) or salts thereof (PAA-Na, PAA-K, and the like, and partially neutralized salts may be used), and polyvinyl alcohol (PVA).

Examples of the conductive agent include carbon black, acetylene black, and Ketjen black.

### EXAMPLES

Hereinafter, the present disclosure will be further described with reference to Examples. The present disclosure, however, is not limited to these Examples.

### <Example 1>

Smectite SWN (manufactured by Kunimine Industrial Co., Ltd.) was dissolved in water to prepare a 10 mass% smectite-containing aqueous solution. An N-methyl-2-pyrrolidone single solvent was added to the solution to prepare a smectite 5 mass%-NMP aqueous solution. A beaker containing the smectite 5 mass%-NMP aqueous solution was placed on a hot plate at 100°C. When the smectite 5 mass%-NMP aqueous solution was solidified into a jelly state, heating was stopped. The resulting product was allowed to stand in a dry atmosphere for 24 hours, to obtain a smectite-containing solid mass.

The obtained smectite-containing solid mass, a lithium-transition metal composite oxide as a positive electrode active material, acetylene black as a conductive agent, and polyvinylidene fluoride as a binder were blended at a mass ratio of 1 : 100 : 2 : 1. Then, an appropriate amount of an N-methyl-2-pyrrolidone single solvent was added to the mixture, to obtain a positive electrode slurry in which smectite was added in an amount of 0.1 wt% with respect to the slurry solid content concentration.

As illustrated in FIG. 1, the positive electrode slurry was intermittently discharged from the coating head while the roll was rotated to convey an aluminum foil as a positive electrode current collector in the conveying direction X, and a coated part and a non-coated part were formed on the aluminum foil. As coating conditions, the coating speed of the coating slurry was set to 40 m/min, and the thickness of the coated part was set to 150 ± 10µm. Then, coating was performed so that the length of the coated part in the conveying direction X was 600 mm and the length of the non-coated part in the conveying direction X was 30 mm.

### <Example 2>

Coating was performed in the same manner as in Example 1 except that the obtained smectite-containing solid mass, a lithium-transition metal composite oxide as a positive electrode active material, acetylene black as a conductive agent, and polyvinylidene fluoride as a binder were blended (positive electrode slurry to which smectite was added in an amount of 0.05 wt% with respect to the slurry solid content concentration) at a mass ratio of 1 : 200 : 3 : 2.

### <Comparative Example 1>

Coating was performed in the same manner as in Example 1 except that a positive electrode slurry containing no smectite-containing solid mass was used.

### <Comparative Example 2>

Coating was performed in the same manner as in Example 1 except that smectite (Smecton-SWN, manufactured by Kunimine Industrial Co., Ltd.) which was not subjected to thermal dehydration, a lithium-transition metal composite oxide as a positive electrode active material, acetylene black as a conductive agent, and polyvinylidene fluoride as a binder were blended (positive electrode slurry to which smectite was added in an amount of 0.1 wt% with respect to the slurry solid content concentration) at a mass ratio of 1 : 1,000 : 10 : 5.

### <Comparative Example 3>

Coating was performed in the same manner as in Example 1 except that smectite (Smecton-SWN, manufactured by Kunimine Industrial Co., Ltd.) which was not subjected to thermal dehydration, a lithium-transition metal composite oxide as a positive electrode active material, acetylene black as a conductive agent, and polyvinylidene fluoride as a binder were blended (positive electrode slurry to which smectite was added in an amount of 0.05 wt% with respect to the slurry solid content concentration) at a mass ratio of 1 : 2,000 : 20 : 10.

For Examples 1 to 2 and Comparative Examples 1 to 3, the length of the string trace at the coating end was obtained. Specifically, three coated parts were freely selected from the plurality of intermittently formed coated parts, the lengths of the string traces at the coating end in the selected three coated parts were measured, the average value thereof was obtained, and the average value was taken as the length L of the string trace. The length of the string trace at the coating end in the three coated parts is an average value of the lengths of the plurality of string traces formed at each coating end.

When the length L of each of the string traces of Examples 1 to 2 and Comparative Examples 2 to 3 was expressed as a relative value with the length L of the string trace of Comparative Example 1 as 100, the length L of the string trace of Example 1 was 75, the length L of the string trace of Example 2 was 82, and the lengths L of the string traces of Comparative Examples 2 and 3 were both 95. That is, stringing at the coating end can be suppressed by preparing a positive electrode slurry by using a smectite-containing solid mass obtained by subjecting, to thermal dehydration, a smectite-NMP aqueous solution prepared by mixing an aqueous solution in which smectite is dissolved, and an N-methyl-2-pyrrolidone (NMP)-containing solvent.

### REFERENCE SIGNS LIST

- 1: Coating apparatus
- 10: Stirrer
- 14: Liquid feeder
- 16: Coating head
- 18: Intermittent mechanism
- 26: Coated part
- 28: Non-coated part
- 30b: Flow path
- 32: Roll
- 34: Positive electrode current collector
- 36: String trace
- P1: Coating start end
- P2: Coating end
- X: Conveying direction

## Claims

1. A method for producing a positive electrode slurry, comprising:
mixing an aqueous solution in which smectite is dissolved, and an N-methyl-2-pyrrolidone (NMP)-containing solvent, to prepare a smectite-NMP aqueous solution;
subjecting the smectite-NMP aqueous solution to thermal dehydration, to obtain a smectite-containing solid mass; and
mixing the smectite-containing solid mass, a positive electrode active material, and the N-methyl-2-pyrrolidone (NMP)-containing solvent, to prepare a slurry.

2. The method for producing a positive electrode slurry according to Claim 1, wherein a concentration of the smectite in the aqueous solution in which the smectite is dissolved is greater than or equal to 5 mass% and less than or equal to 20 mass%.

3. The method for producing a positive electrode slurry according to Claim 1 or 2, wherein a mixing ratio of the aqueous solution in which the smectite is dissolved to the N-methyl-2-pyrrolidone (NMP)-containing solvent is in a range of 1 : 0.5 to 1 : 1.5 in a volume ratio.

4. The method for producing a positive electrode slurry according to any one of Claims 1 to 3, wherein thermal dehydration of the smectite-NMP aqueous solution is performed until a moisture content of the smectite-containing solid mass reaches greater than or equal to 5% and less than or equal to 10%.

5. The method for producing a positive electrode slurry according to any one of Claims 1 to 3, wherein thermal dehydration of the smectite-NMP aqueous solution is performed until a moisture content of the smectite-containing solid mass reaches 0%.

6. The method for producing a positive electrode slurry according to any one of Claims 1 to 5, wherein a concentration of the smectite solid mass in the N-methyl-2-pyrrolidone (NMP)-containing solvent is greater than or equal to 10 mass%.

7. A method for producing a positive electrode, comprising applying a positive electrode slurry obtained by the production method according to any one of Claims 1 to 6 to a positive electrode current collector.
